# EUROPÄISCHE PATENTANMELDUNG

(11) **EP 4 752 388 A1**
(43) Veröffentlichungstag der Anmeldung: **03.06.2026**
(21) Anmeldenummer: 25218893.3
(22) Anmeldetag: 27.11.2025
(51) Int. Cl.: F16C 29/10

(54) **TELESKOPSCHIENE MIT ENDLAGENVERRASTUNG UND SELBSTEINZUG**

(30) Priorität: 29.11.2024 DE 102024135524
(71) Anmelder: Accuride International GmbH, 65582 Diez/Lahn (DE)
(72) Erfinder: WAGNER, Thomas, 65597 Hünfelden (DE); NEUHAUS, Christoph, 56412 Niederelbert (DE)
(74) Vertreter: WSL Patentanwälte Partnerschaft mbB

(57) **Zusammenfassung**

Teleskopschiene mit einer Außenschiene (2), einer Mittelschiene (3) und einer Innenschiene (4), welche auch bei kompakter Bauweise sowohl einen Selbsteinzug als auch einen Mechanismus für ein lösbares Verrasten der Schienenelemente in der vollständig ausgezogenen Endlage aufweist.

## Beschreibung

### GEGENSTAND DER ERFINDUNG

Die vorliegende Erfindung betrifft eine als Vollauszug ausgebildete Teleskopschiene mit einer Außenschiene, wenigstens einer Mittelschiene und einer Innenschiene, welche in einer Einschubrichtung und einer dazu entgegengesetzten Auszugsrichtung linear verschiebbar aneinander gelagert sind.

### HINTERGRUND DER ERFINDUNG

Teleskopschienen weisen grundsätzlich zwei Schienenelemente und optional ein drittes, gegebenenfalls auch ein viertes Schienenelement auf, wobei die Schienenelemente in der Regel gleich oder ähnlich lang und über Wälzkörperlager oder Gleitlager linear gegeneinander verschiebbar gelagert sind. Teleskopschienen mit zwei Schienenelementen bilden einen sogenannten Teilauszug, wogegen Teleskopschienen mit drei oder mehr Schienenelementen als Vollauszug oder Überauszug bezeichnet werden. Wälzkörper- oder Gleitlager zwischen den Schienenelementen dienen der Verminderung der Reibung und der Verbesserung der Laufruhe und des Lastenabtrags. Als Wälzkörper werden insbesondere Kugeln, aber auch Rollen, Walzen, Nadeln, Kegel, etc. eingesetzt. Beim Verschieben der Schienenelemente gegeneinander werden die Wälzkörper an Laufbahnen abgerollt und geführt, welche entsprechend der Form der Wälzkörper an den Schienenelementen ausgebildet sind. Bei Gleitlagern werden entweder Gleitkörper zwischen den Schienenelementen an entsprechend ausgebildeten Lauf- oder Gleitbahnen geführt oder die Gleitflächen sind an den Schienenelementen selbst ausgebildet.

Um Wälzkörper in einem bestimmten Abstand zueinander zu halten und um beim Verfahren der Schienenelemente ein Auseinanderlaufen oder auch ein Herausfallen der Wälzkörper aus der Teleskopschiene zu verhindern, werden diese in zwischen den Schienenelementen angeordneten Wälzkörperkäfigen geführt. Werden als Wälzkörper Kugeln eingesetzt, spricht man von Kugelkäfigen. Soweit nachfolgend hierin von Kugeln als Wälzkörper und Kugelkäfigen als Wälzkörperkäfigen die Rede ist, so umfasst dies auch andere Arten von Wälzkörpern und Wälzkörperkäfigen, soweit es nicht ausdrücklich ausgeschlossen ist oder technische Gründe gegen andere Wälzkörper als Kugeln sprechen.

Teleskopschienen dienen dem geführten linearen Verschieben eines Elements gegenüber einem weiteren Element. In den meisten Anwendungen dienen sie dem Halten und linearen Verschieben, insbesondere dem Herausziehen und Einschieben, eines Auszugselements, wie einer Schublade, eines Tablars oder eines anderen Bauteils, an einem Korpus, wie einem Möbelstück, einem Technikschrank, einem Computerrack oder ähnlichem. Auch im Automobilbau werden Teleskopschienen zum Halten und Verschieben von beispielsweise Sitzen, Türen, Konsolen etc. oder für Schübe im Fahrzeuginnenraum eingesetzt. Die Teleskopschienen werden in diesen Anwendungen mit einem der Schienenelemente, dem sogenannten stationären Schienenelement, an dem Korpus festgelegt, und das zu verschiebende Element an einem gegenüber dem stationären Schienenelement verschiebbaren Schienenelement befestigt.

Die Schienenelemente von Teleskopschienen können verschiedenste Querschnittsprofile aufweisen. Am häufigsten ist das C-Profil mit einem Steg, welcher den Schienenrücken bildet, und mit an gegenüberliegenden Enden des Stegs ausgebildeten und sich abgewinkelt vom Steg erstreckenden Flanschen, an denen die Laufbahnen des Schienenelements ausgebildet sind. Als Mittelschiene zwischen zwei weiteren Schienenelementen kommt neben dem C-Profil auch das Doppel-T-Profil zum Einsatz. Bei einer als C-Profil ausgebildeten Mittelschiene sind an jedem der beiden Flansche des C-Profils regelmäßig zwei Laufbahnen ausgebildet, jeweils eine auf der Innenseite des Flansches, welche dem gegenüberliegenden Flansch des C-Profils zugewandt ist, und jeweils eine auf der Außenseite des Flansches, welche dem gegenüberliegenden Flansch des C-Profils abgewandt ist. Mit den Flanschen umgreift die Mittelschiene ein in der Regel kleineres Schienenelement mit geringerer Steglänge, das auch als Innenschiene bezeichnet wird, während die Mittelschiene selbst von einem in der Regel größeren Schienenelement mit größerer Steglänge umgriffen wird, das auch als Außenschiene bezeichnet wird.

In den meisten Anwendungen werden die Schienenelemente mit dem Steg bzw. Schienenrücken in vertikaler Ausrichtung montiert, da das Profil unter Last in dieser Ausrichtung die höchste Biegefestigkeit besitzt und den besten Lastenabtrag über die Wälz- oder Gleitkörper an den Laufbahnen gewährleistet.

Es ist bekannt, Teleskopschienen mit einem sogenannten Selbsteinzug für ein kraftunterstütztes Einziehen der Schienenelemente über eine letzte Wegstrecke in den vollständig eingefahrenen Zustand auszustatten. Teleskopschienen mit Selbsteinzug werden häufig beispielsweise bei Schubladen eingesetzt. In der Regel ist der Selbsteinzug am stationären Schienenelement an dessen in Einschubrichtung liegenden Endabschnitt festgelegt und weist einen durch ein Feder- oder Einzugselement in Einschubrichtung vorgespannten bzw. vorspannbaren Mitnehmer auf. Wenn die Teleskopschiene ausgezogen wird, wird der Mitnehmer von einem verschiebbaren Schienenelement, mit dem er über eine Einhalterung in Eingriff ist, in Auszugsrichtung entgegen der Vorspannung des Feder- oder Einzugselements mitgenommen, unter Vorspannung in Einschubrichtung in einem Abstand von der vollständig eingefahrenen Position arretiert und von der Einhalterung des in Auszugsrichtung verfahrenden Schienenelements außer Eingriff gebracht, so dass dieses weiter in Auszugsrichtung verschoben werden kann. Beim Einschieben des verschiebbaren Schienenelements trifft dieses auf den Mitnehmer, tritt über die Einhalterung mit diesem in Eingriff, löst den Mitnehmer aus der Arretierung und wird über die letzte Wegstrecke in den vollständig eingefahrenen Zustand eingezogen.

Es ist auch bekannt, die verschiebbaren Schienenelemente einer Teleskopschiene in der Endlage im ausgezogenen Zustand gegeneinander lösbar zu verrasten, um ein Auszugselement in der vollständig ausgezogenen Endlage zu halten, so dass es nicht unbeabsichtigt, sondern nur unter Aufbringung einer durch den jeweiligen Verrastungsmechanismus vorgegebenen Kraft wieder eingeschoben werden kann.

In vielen Einbausituationen ist es erforderlich, dass die Teleskopschienen kompakt ausgestaltet sind, so dass sie möglichst einen geringen Raum einnehmen, insbesondere in der seitlichen Ausdehnung senkrecht zu Ihrer Längserstreckung zwischen dem Korpus und dem zu verfahrenden Auszugselement. Um dies zu erreichen, werden die Schienenelemente der Teleskopschiene, beispielsweise solche mit C-Profil, daher mit möglichst geringem Abstand ihrer Schienenrücken zueinander angeordnet. Infolgedessen ist aber auch der verfügbare Bauraum zwischen den Schienenelementen für die Unterbringung zusätzlicher Bauteile eingeschränkt.

Für bestimmte Anwendungen wäre es wünschenswert, eine als Vollauszug ausgebildete Teleskopschiene sowohl mit einem Selbsteinzug für ein kraftunterstütztes Einziehen der Schienenelemente über eine letzte Wegstrecke in den vollständig eingefahrenen Zustand als auch mit einem Mechanismus für ein lösbares Verrasten der Schienenelemente in der vollständig ausgezogenen Endlage auszustatten. Die Kombination dieser beiden Funktionen ist mit den bekannten Ausgestaltungen von Selbsteinzügen und Verrastungsmechanismen insbesondere bei Teleskopschienen mit kompakter Bauweise jedoch nicht zwischen den Schienenelementen realisierbar, da sich diese in dem geringen verfügbaren Bauraum zwischen den Schienenelementen gegenseitig blockieren. Wenigstens eine der beiden Funktionen müsste außerhalb des Bauraums zwischen den Schienenelementen oder ganz außerhalb der Teleskopschiene angeordnet sein, was aufwändig ist und zusätzlichen Raum außerhalb der Schienenelemente bzw. der Teleskopschiene einnehmen würde.

Die Aufgabe der vorliegenden Erfindung bestand daher in der Bereitstellung einer als Vollauszug ausgebildeten Teleskopschiene, welche die vorgenannten Nachteile des Standes der Technik ausräumt und auch bei kompakter Bauweise sowohl einen Selbsteinzug als auch einen Mechanismus für ein lösbares Verrasten der Schienenelemente in der vollständig ausgezogenen Endlage aufweist.

### BESCHREIBUNG DER ERFINDUNG

Gelöst wird diese Aufgabe erfindungsgemäß durch eine als Vollauszug ausgebildete Teleskopschiene gemäß dem beigefügten unabhängigen Anspruch 1, welche einen Selbsteinzug für ein kraftunterstütztes Einziehen der Schienenelemente über eine letzte Wegstrecke in den vollständig eingefahrenen Zustand und gleichzeitig einen Mechanismus für ein lösbares Verrasten der Schienenelemente in der vollständig ausgezogenen Endlage aufweist. Ausführungsformen und weitere Ausgestaltungen ergeben sich aus den abhängigen Unteransprüchen.

Die erfindungsgemäße Teleskopschiene erlaubt es, auch bei Teleskopschienen mit kompakter Bauweise und engem Bauraum zwischen den Schienenelementen die Vorteile eines Selbsteinzugs in Kombination mit einer Endlagenverrastung in der vollständig ausgezogenen Endlage zu realisieren und die hierfür erforderlichen Elemente zwischen den Schienenelementen anzuordnen.

Die erfindungsgemäße Teleskopschiene ist als Vollauszug ausgebildet mit einer Außenschiene, einer Mittelschiene und einer Innenschiene. Die Innenschiene ist zwischen einer ersten Einschubendlageposition und einer ersten Auszugsendlageposition an der Mittelschiene in einer Einschubrichtung (E) und einer dazu entgegengesetzten Auszugsrichtung (A) linear verschiebbar gelagert, und die Mittelschiene ist zwischen einer zweiten Einschubendlageposition und einer zweiten Auszugsendlageposition an der Außenschiene in der Einschubrichtung (E) und der dazu entgegengesetzten Auszugsrichtung (A) linear verschiebbar gelagert.

Erste Einschubendlageposition und erste Auszugsendlageposition beschreiben hierin die Positionen, bei denen die Innenschiene gegenüber der Mittelschiene in Einschubrichtung vollständig eingeschoben bzw. in Auszugsrichtung vollständig ausgezogen ist. Zweite Einschubendlageposition und zweite Auszugsendlageposition beschreiben hierin die Positionen, bei denen die Mittelschiene gegenüber der Außenschiene in Einschubrichtung vollständig eingeschoben bzw. in Auszugsrichtung vollständig ausgezogen ist. Die Einschubendlageposition der gesamten Teleskopschiene beschreibt hierin die Position, bei der alle Schienenelemente vollständig eingeschoben sind, d. h. die Innenschiene befindet sich gegenüber der Mittelschiene in der ersten Einschubendlageposition und die Mittelschiene befindet sich gegenüber der Außenschiene in der zweiten Einschubendlageposition. Dies ist gleich bedeutend mit der Einschubendlageposition der Innenschiene gegenüber der Außenschiene.

Vorzugsweise sind die Schienenelemente über Wälzkörperlager oder Gleitlager verschiebbar aneinander gelagert. Besonders bevorzugt sind die Schienenelemente über Kugellager mit in Kugelkäfigen angeordneten und geführten Kugeln verschiebbar aneinandergelagert.

Grundsätzlich sind derartige Teleskopschienen mit Anschlägen in beiden Verschieberichtungen ausgestattet, welche den Verschiebeweg der einzelnen Schienenelemente gegeneinander begrenzen, so dass die Schienenelemente nicht auseinanderlaufen können und voneinander getrennt werden. Eine Endlagenposition bezeichnet das Ende eines Verschiebeweges in entsprechender Verschieberichtung aufgrund der Begrenzung durch einen solchen Anschlag.

Die Außenschiene, die Mittelschiene und die Innenschiene weisen jeweils einen Schienenrücken und sich von dem Schienenrücken abgewinkelt erstreckende Abschnitte mit daran ausgebildeten Laufbahnen auf. In Ausführungsformen der erfindungsgemäßen Teleskopschiene, bei denen die Schienenelemente über Wälzkörperlager oder Gleitlager verschiebbar aneinander gelagert sind, sind die Laufbahnen für das Abwälzen von Wälzkörpern oder für das Führen von Gleitelementen vorgesehen und ausgebildet.

**In** Ausführungsformen der Erfindung weisen die Außenschiene, die Mittelschiene und die Innenschiene im Querschnitt ein C-Profil auf mit einem von dem Steg des C-Profils gebildeten Schienenrücken und mit an den Flanschen des C-Profils ausgebildeten Laufbahnen für das Abwälzen von Wälzkörpern oder für das Führen von Gleitelementen.

In alternativen Ausführungsformen der Erfindung weisen die Außenschiene und die Innenschiene im Querschnitt ein C-Profil auf und die Mittelschiene im Querschnitt ein Doppel-T-Profil mit einem von dem Steg des Doppel-T-Profils gebildeten Schienenrücken und mit an den Flanschen des Doppel-T-Profils ausgebildeten Laufbahnen für das Abwälzen von Wälzkörpern oder für das Führen von Gleitelementen.

Erfindungsgemäß soll ein lösbares Verrasten der Schienenelemente bei vollständig ausgezogener Teleskopschiene erzielt werden, d. h. wenn sich die Mittelschiene und die Innenschiene in den vollständig ausgezogenen Endlagen befinden. Hierfür wird erfindungsgemäß bei vollständig ausgezogener Teleskopschiene sowohl die Innenschiene gegenüber der Mittelschiene in der ersten Auszugsendlageposition als auch die Mittelschiene gegenüber der Außenschiene in der zweiten Auszugsendlageposition verrastet. Verrasten bedeutet in diesem Zusammenhang, dass zum Lösen der Verrastung aus der vollständig ausgezogenen Endlage eine Kraft (Entrastungskraft) in Einschubrichtung aufzubringen ist, die größer ist als die zum Verschieben der Schienenelemente außerhalb der Verrastung erforderliche Kraft, oder dass zum Lösen der Verrastung aus der vollständig ausgezogenen Endlage eine Entriegelung, beispielsweise ein Entriegelungshebel, zu betätigen ist.

Erfindungsgemäß weist die Mittelschiene daher ein erstes Rastelement auf und die Innenschiene weist ein zweites Rastelement auf, wobei das erste Rastelement und das zweite Rastelement für ein formschlüssiges und/oder kraftschlüssiges lösbares Ineingrifftreten und für ein Verrasten der Mittelschiene und der Innenschiene ausgebildet sind. Die Rastelemente sind derart angeordnet und ausgebildet, dass ein Verrasten der Mittelschiene und der Innenschiene erfolgt, wenn sich die Schienenelemente in einer Position befinden, bei der die Innenschiene in Auszugsrichtung (A) bis zu der ersten Auszugsendlageposition an der Mittelschiene verfahren ist. In Ausführungsformen der Erfindung ist das erste Rastelement an der Mittelschiene festgelegt oder einstückig mit dieser ausgebildet und/oder das zweite Rastelement an der Innenschiene festgelegt oder einstückig mit dieser ausgebildet.

Ein Rastelement kann beispielsweise eine Rastnase aufweisen, welche für ein Verrasten oder beim Lösen der Verrastung über eine Rast geführt wird und in der verrasteten Stellung in Auszugsrichtung hinter der Rast zu liegen kommt. Zweckmäßigerweise ist die Rastnase und/oder die Rast ein elastisches oder federnd vorgespanntes Element und/oder mit Anführschrägen versehen, um das Überfahren der Rast durch die Rastnase oder umgekehrt in die Verrastungsposition oder aus dieser heraus zu gewährleisten oder zu erleichtern. Wenigstens eines der Elemente Rastnase oder Rast weicht dem jeweils anderen Element beim Überfahren aus oder ist für ein Überfahren elastisch verformbar.

In alternativen Ausführungsformen ist die Rastnase für einen Eingriff mit der Rast in die Eingriffsposition so ausgestaltet, dass sie durch Schwerkraft in die Eingriffsposition bewegbar ist. Ein Lösen der Verrastung erfolgt entweder durch Überfahren einer Anführschräge oder mitlels eines von einer Bedienperson zu betätigenden Hebels oder einer Betätigungslasche.

In weiteren Ausführungsformen, bei denen die Schienenelemente über Kugellager gegeneinander verschiebbar gelagert sind, ist für ein lösbares Verrasten der Innenschiene gegenüber der Mittelschiene in der vollständig ausgezogenen Endlage, d. h. in der ersten Auszugsendlageposition, eine Kugelrast vorgesehen. Hierfür ist an der Laufbahn der Mittelschiene an einem in Auszugsrichtung angeordneten Endabschnitt als ein erstes Rastelement eine hervortretende Prägung oder Erhebung vorgesehen, welche beim Verschieben der Innenschiene in Auszugsrichtung kurz vor dem Erreichen der ersten Auszugsendlageposition von wenigstens der äußersten in Auszugsrichtung angeordneten Kugel des Kugellagers überfahren wird, wodurch eine Verrastung bewirkt wird. Für ein Lösen der Verrastung aus der ersten Auszugsendlageposition ist eine erhöhte Kraft aufzubringen, um die Kugel in Einschubrichtung wieder über die hervortretende Prägung oder Erhebung zu führen. Die Kugel des Kugellagers ist im Sinne der vorliegenden Erfindung somit als das zweite Rastelement zu verstehen.

Des Weiteren ist erfindungsgemäß für ein lösbares Verrasten der Mittelschiene gegenüber der Außenschiene an der Mittelschiene eine Haltefalle angeordnet, welche um eine senkrecht zu der Einschubrichtung (E) und der dazu entgegengesetzten Auszugsrichtung (A) angeordnete Drehachse zwischen einer Haltestellung und einer Neutralstellung drehbar oder schwenkbar festgelegt ist.

In Ausführungsformen der erfindungsgemäßen Teleskopschiene ist die Haltefalle an dem in Einschubrichtung weisenden Endabschnitt der Mittelschiene festgelegt. In weiteren Ausführungsformen der erfindungsgemäßen Teleskopschiene ist die Haltefalle an einem Abschnitt der Mittelschiene festgelegt, welcher zwischen dem in Einschubrichtung weisenden Endabschnitt der Mittelschiene und dem in Einschubrichtung weisenden Endabschnitt der Innenschiene liegt, wenn die Innenschiene in Auszugsrichtung bis zu der ersten Auszugsendlageposition, d. h. vollständig ausgezogen, an der Mittelschiene verschoben ist.

Für die drehbare oder schwenkbare Festlegung der Haltefalle ist eine Drehachse vorgesehen, vorzugsweise ein Drehlager. Das Drehlager kann beispielsweise durch einen Lagerzapfen, der sich durch eine Bohrung in der Haltefalle erstreckt, realisiert sein. Alternative Ausgestaltungen geeigneter Drehlager sind der Fachperson grundsätzlich bekannt.

Am Schienenrücken der Außenschiene ist ein Haltevorsprung angeordnet, welcher vom Schienenrücken der Außenschiene auf der der Mittelschiene zugewandten Seite des Schienenrückens hervortritt bzw. sich vom Schienenrücken der Außenschiene erhebt und an einer Position angeordnet ist, dass die Haltefalle in Auszugsrichtung (A) hinter dem Haltevorsprung angeordnet ist, wenn die Mittelschiene in Auszugsrichtung (A) bis zu der zweiten Auszugsendlageposition an der Außenschiene verfahren ist. In Ausführungsformen ist der Haltevorsprung ein an den Schienenrücken der Außenschiene angeschweißtes oder angeschraubtes Element. **In** weiteren Ausführungsformen ist der Haltevorsprung aus dem Material des Schienenrückens durch Ausprägung des Materials oder durch eine aus dem Material des Schienenrückens ausgeschnittene und umgebogene Lasche ausgebildet.

Die Haltefalle weist im Querschnitt einen sich senkrecht zur Drehachse der Haltefalle erstreckenden ersten Haltefallenabschnitt und einen sich vom ersten Haltefallenabschnitt in einer Richtung zum Schienenrücken der Außenschiene abgewinkelt erstreckenden zweiten Haltefallenabschnitt auf.

Der zweite Haltefallenabschnitt der Haltefalle ist ausgebildet und angeordnet, dass er in der Haltestellung der Haltefalle für ein Blockieren eines Verschiebens der Mittelschiene aus der zweiten Auszugsendlageposition in Einschubrichtung an dem vom Schienenrücken der Außenschiene hervortretenden Haltevorsprung in Anlage tritt. Dadurch ist die Mittelschiene gegenüber der Außenschiene in der zweiten Auszugsendlageposition verrastet. In der Neutralstellung der Haltefalle ist der zweite Haltefallenabschnitt der Haltefalle in einer Position, dass er bei einem Verschieben der Mittelschiene aus der zweiten Auszugsendlageposition in Einschubrichtung nicht in Anlage mit dem vom Schienenrücken der Außenschiene hervortretenden Haltevorsprung tritt, sondern an diesem vorbeiführbar ist. In der Neutralstellung der Haltefalle ist die Mittelschiene für ein Verschieben aus zweiten Auszugsendlageposition in Einschubrichtung freigegeben.

Der Haltevorsprung ist so ausgebildet, dass er von dem Schienenrücken der Außenschiene nur bis zu einem Abstand hervortritt, dass der erste Haltefallenabschnitt der Haltefalle bei einem Verschieben der Mittelschiene gegenüber der Außenschiene nicht mit dem Haltevorsprung in Berührung tritt, sondern über diesen in Einschubrichtung bzw. Auszugsrichtung hinüber geführt werden kann, wenn die Haltefalle in der Neutralstellung ist.

Des Weiteren ist erfindungsgemäß an dem in Einschubrichtung weisenden Endabschnitt der Außenschiene ein Selbsteinzug festgelegt für ein kraftunterstütztes Verschieben der Innenschiene aus einem Abstand von einer Einschubendlageposition der Innenschiene gegenüber der Außenschiene in die Einschubendlageposition, bei der die Teleskopschiene vollständig eingeschoben ist. Der Selbsteinzug weist einen Mitnehmer und ein mit dem Mitnehmer verbundenes Kraftunterstützungselement, wie eine Zugfeder oder eine Schubfeder, auf. Der Mitnehmer ist durch das Kraftunterstützungselement in Einschubrichtung vorgespannt in einem Abstand von der Einschubendlageposition arretierbar.

Erfindungsgemäß wird die Mittelschiene in die zweite Einschubendlageposition eingezogen, indem die Innenschiene von dem Selbsteinzug in die Einschubendlageposition der Innenschiene gegenüber der Außenschiene eingezogen wird und dabei die Mittelschiene mit eingezogen wird, da die Innenschiene beim Verschieben in Einschubrichtung nicht über die erste Einschubendlageposition gegenüber Mittelschiene verschiebbar ist. Hierfür ist an dem in Einschubrichtung weisenden Endabschnitt der Innenschiene eine Einhalterung für einen lösbaren Eingriff mit dem Mitnehmer am Selbsteinzug angeordnet. Die Einhalterung ist so ausgebildet, dass sie mit dem Mitnehmer in Eingriff ist und bleibt, wenn der Mitnehmer von dem Kraftunterstützungselement in Einschubrichtung in die Einschubendlageposition der Innenschiene gegenüber der Außenschiene gezogen wird.

Wird die Innenschiene aus der Einschubendlageposition gegenüber der Außenschiene in Auszugsrichtung gezogen, wird der Mitnehmer entgegen der in Einschubrichtung gerichteten Vorspannung durch das Kraftunterstützungselement gezogen.

Vorzugsweise ist die Einhalterung an dem in Einschubrichtung weisenden Endabschnitt der Innenschiene ausgebildet, dass sie bei einer Verschiebebewegung der Innenschiene in Auszugsrichtung den Mitnehmer in einem Abstand von der Einschubendlageposition der Innenschiene gegenüber der Außenschiene in eine Arretierungsposition bringt, beispielsweise indem sie den Mitnehmer durch eine Seitwärtsbewegung in eine Halteposition verbringt, beispielsweise an einer Rast. Dabei erfolgt gleichzeitig ein Lösen des Eingriffs der Einhalterung mit dem Mitnehmer, sodass die Innenschiene weiter in Auszugsrichtung verschiebbar ist. In umgekehrter Verschieberichtung, d. h. bei einer Verschiebebewegung der Innenschiene in Einschubrichtung, ist die Einhalterung für einen Eingriff mit dem Mitnehmer und für ein Lösen des Mitnehmers aus der Arretierung ausgebildet, sodass die Innenschiene wieder kraftunterstützt in die Einschubendlageposition gezogen wird. Dies kann so erfolgen, dass die Einhalterung zunächst den Mitnehmer durch eine Einführöffnung aufnimmt und an entsprechend angeordneten Flächen bei weiterem Verfahren in Einschubrichtung quer oder seitlich verschiebt, wobei der Mitnehmer aus der Arretierung gelöst wird und gleichzeitig z. B. an einer Hinterschneidung gegen ein unbeabsichtigtes Lösen mit der Einhalterung in Eingriff gebracht wird.

Erfindungsgemäß ist die Einhalterung an dem in Einschubrichtung weisenden Endabschnitt der Innenschiene so angeordnet und ausgebildet , dass sie bei einem Verschieben der Innenschiene gegenüber der Mittelschiene in Einschubrichtung in die erste Einschubendlagenposition nicht in Anlage mit der Haltefalle an der Mittelschiene kommt und nicht in Anlage mit dem vom Schienenrücken der Außenschiene hervortretenden Haltevorsprung kommt, sondern räumlich über die Haltefalle und den Haltevorsprung hinweg oder in Einschubrichtung seitlich daran vorbei verfahrbar ist.

Gemäß bevorzugten Ausführungsformen der erfindungsgemäßen Teleskopschiene sind die Außenschiene, die Mittelschiene und die Innenschiene aus gewalztem Stahlblech hergestellt. Dies erlaubt eine kosteneffektive Herstellung stabiler und belastbarer Schienenelemente.

In Ausführungsformen der Erfindung weist die Haltefalle an der Mittelschiene an ihrem in Einschubrichtung (E) weisenden Endabschnitt im Querschnitt ein C-Profil oder ein L-Profil auf, wobei der sich senkrecht zur Drehachse erstreckende erste Haltefallenabschnitt vom Steg des C-Profils oder von einem Schenkel des L-Profils gebildet wird und der sich vom ersten Haltefallenabschnitt in einer Richtung zum Schienenrücken der Außenschiene abgewinkelt erstreckende zweiten Haltefallenabschnitt von einem Flansch des C-Profils oder von dem weiteren Schenkel des L-Profils gebildet wird.

Vorzugsweise ist der erste Haltefallenabschnitt, der vom Steg des C-Profils oder von einem Schenkel des L-Profils gebildet wird, parallel zur Ebene des Schienenrückens der Außenschiene drehbar oder schwenkbar. Die Drehachse ist somit vorzugsweise senkrecht zur Ebene des Schienenrückens der Außenschiene angeordnet.

In Ausführungsformen der Erfindung erstreckt sich der erste Haltefallenabschnitt bis zu der Drehachse, an der die Haltefalle an der Mittelschiene zwischen einer Haltestellung und einer Neutralstellung drehbar oder schwenkbar festgelegt ist. Die Drehachse steht vorzugsweise senkrecht zur Ebene des ersten Haltefallenabschnitts.

In Ausführungsformen der Erfindung weist die Haltefalle an der Mittelschiene in der Neutralstellung bzw. bezogen auf die Neutralstellung senkrecht zur Einschubrichtung (E) und Auszugsrichtung (A) eine Breite auf, die geringer ist als der kürzeste Abstand zwischen den Laufbahnen der Innenschiene. So ist die Haltefalle am Endabschnitt der Mittelschiene zwischen die Laufbahnen der Innenschiene einführbar, wenn die Innenschiene in Einschubrichtung (E) über die Haltefalle geschoben wird.

In Ausführungsformen der Erfindung ist die Haltefalle an der Mittelschiene bei einer Ausrichtung der Teleskopschiene waagerecht in Bezug auf die Einschubrichtung (E) und die Auszugsrichtung (A) und vertikaler Ausrichtung der Schienenrücken der Schienenelemente durch Schwerkraft aus der Neutralstellung in die Haltestellung drehbar oder schwenkbar. Diese Ausführungsform erfordert keine zusätzlichen Mittel zum Verdrehen oder Verschwenken der Haltefalle zwischen der Neutralstellung und der Haltestellung und ist daher regelmäßig dann geeignet und von Vorteil, wenn die Teleskopschiene für einen Einbau mit vertikaler (senkrechter) Ausrichtung der Schienenrücken vorgesehen ist, wie beispielsweise zum Führen von Schubladen oder anderen Auszügen an einer vertikal (senkrecht) ausgerichteten Korpuswand. In vorteilhaften Ausgestaltungen dieser Ausführungsform weist die Haltefalle an ihrem Ende in Einschubrichtung ein C-Profil auf, sodass in und entgegen der Schwerkraftrichtung jeweils ein sich abgewinkelt vom ersten Haltefallenabschnitt erstreckender zweiter Haltefallenabschnitt vorgesehen ist, der in der Haltestellung mit dem Haltvorsprung an der Außenschiene für eine Verriegelung in Anlage treten kann. Diese Ausführung erlaubt es, die gleichen Teleskopschienen auf einander gegenüberliegenden Seiten eines Auszugs zu verwenden. Bei einander gegenüberliegend eingebauten Teleskopschienen ist der bei einer Teleskopschiene vertikal oben, d. h. entgegen der Schwerkraftrichtung, angeordnete zweite Haltefallenabschnitt bei der gegenüberliegenden Teleskopschiene vertikal unten, d. h. in Schwerkraftrichtung, angeordnet und kann somit in der Haltestellung nicht mit dem Haltvorsprung an der Außenschiene für eine Verriegelung in Anlage treten. Bei dem C-Profil der Haltefalle ist jedoch bei einander gegenüberliegend eingebauten Teleskopschiene immer ein zweiter Haltefallenabschnitt vertikal oben, d. h. entgegen der Schwerkraftrichtung, angeordnet.

In alternativen Ausführungsformen der Erfindung ist an der Mittelschiene ein Federelement oder Zugelement vorgesehen, welches die Haltefalle an der Mittelschiene für eine Drehung oder Verschwenkung aus der Neutralstellung in die Haltestellung vorspannt bzw. aus der Neutralstellung in die Haltestellung zieht. Diese Ausführungsform erlaubt beispielsweise den liegenden oder schrägen Einbau der Teleskopschiene, d. h. mit horizontaler oder schräger Ausrichtung der Schienenrücken der Schienenelemente bzw. in einer Stellung, in der ein Verdrehen oder Verschwenken der Haltefalle zwischen der Neutralstellung und der Haltestellung durch Schwerkraft nicht erfolgen kann.

In Ausführungsformen der Erfindung weist die Haltefalle an der Mittelschiene an dem ersten Haltefallenabschnitt wenigstens eine Anlaufschräge auf, welche für eine Anlage mit einem Endabschnitt der Innenschiene, vorzugsweise einem Endabschnitt einer Laufbahn der Innenschiene, angeordnet ist, wenn die Haltefalle in der um die Drehachse gedrehten oder verschwenkten Haltestellung ist. Dabei ist die Anlaufschräge für ein Drehen oder Verschwenken der Haltefalle aus der Haltestellung in die Neutralstellung bei einem Verschieben der Innenschiene in Einschubrichtung (E) ausgebildet und angeordnet.

Trifft die Innenschiene auf die Anlaufschräge der Haltefalle in der Haltestellung, drückt sie die Haltefalle beim weiteren Verschieben in Einschubrichtung aus der Haltestellung in die Neutralstellung, sodass die Mittelschiene aus der Verrastung mit der Außenschiene in der zweiten Auszugsendlageposition gebracht wird und in Einschubrichtung in die zweite Einschubendlageposition verschoben werden kann.

In Ausführungsformen der Erfindung umfasst das mit dem Mitnehmer verbundene Kraftunterstützungselement an dem Selbsteinzug wenigstens ein Federelement, ausgewählt unter Zugfederelementen, Druckfederelementen und Kombinationen davon. In bevorzugten Ausführungsformen umfasst das Kraftunterstützungselement an dem Selbsteinzug wenigstens eine Spiralzugfeder.

In Ausführungsformen der Erfindung weist der Selbsteinzug weiterhin ein Dämpfungselement auf, vorzugsweise wenigstens einen Luftdruckdämpfer oder Öldruckdämpfer, welches für ein Dämpfen des Verschiebens und/oder des kraftunterstützten Verschiebens bzw. Einziehens der Innenschiene in die zweite Einschubendlageposition angeordnet ist.

In Ausführungsformen der Erfindung ist der Mitnehmer am Selbsteinzug als ein Zapfen oder eine Lasche ausgebildet, welcher/welche in einer Richtung senkrecht zum Schienenrücken der Außenschiene hervorsteht, und die Einhalterung am Endabschnitt der Innenschiene weist eine Einlauföffnung für ein Einführen des Mitnehmers und Führungsflächen für eine Seitwärtsführung des Mitnehmers auf.

Weitere Vorteile, Merkmale und Anwendungsmöglichkeiten der vorliegenden Erfindung werden anhand der folgenden Beschreibung von Ausführungsformen davon und der dazugehörigen Figuren deutlich. In den Figuren sind gleiche Elemente mit gleichen Bezugszeichen bezeichnet.

### FIGUREN

- Figur 1: zeigt eine Ausführungsform einer erfindungsgemäßen Teleskopschiene mit einer Außenschiene, einer Mittelschiene und einer Innenschiene mit vollständig in eine Endlageposition eingeschobenen Schienenelementen in einer Seitenansicht mit Blick auf die Außenseite der Innenschiene;
- Figur 2: zeigt die erfindungsgemäße Teleskopschiene gemäß der Ausführungsform in Figur 1 mit vollständig ausgezogenen Schienenelementen, wobei die Innenschiene gegenüber der Mittelschiene in der ersten Auszugsendlageposition verrastet ist und die Mittelschiene gegenüber der Außenschiene in der zweiten Auszugsendlageposition verrastet ist, in einer Seitenansicht mit Blick auf die Außenseite der Innenschiene;
- Figuren 2b und 2c: zeigen Schnittansichten entlang der Linie X-X in Figur 2a in einer weggebrochenen Ansicht schräg von Vorne (Figur 2b) und in einer Ansicht von Vorne (Figur 2c);
- Figur 3a: zeigt die erfindungsgemäße Teleskopschiene gemäß der Ausführungsform in Figur 1 mit der Mittelschiene in der vollständig ausgezogenen zweiten Auszugsendlageposition und mit gegenüber der ersten Auszugsendlagenposition in Einschubrichtung verschobener Innenschiene in einer Seitenansicht mit Blick auf die Außenseite der Innenschiene;
- Figuren 3b und 3c: zeigen Schnittansichten entlang der Linie X-X in Figur 3a in einer weggebrochenen Ansicht schräg von Vorne (Figur 2b) und in einer Ansicht von Vorne (Figur 3c);
- Figur 4: zeigt schematisch eine weggebrochene Darstellung durch einen Längsschnitt durch die erfindungsgemäße Teleskopschiene gemäß der Ausführungsform in Figur 1 mit vollständig ausgezogenen Schienenelementen mit Blick auf die ersten und zweiten Rastelemente an der Mittelschiene und der Innenschiene.

### DETAILLIERTE BESCHREIBUNG DER ERFINDUNG

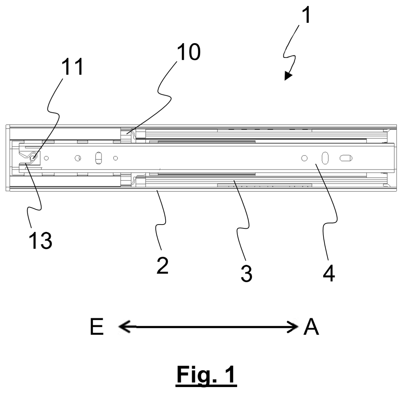

Die Figuren 1 bis 4 zeigen verschiedene Ansichten und Einschubsituationen einer Ausführungsform einer erfindungsgemäßen Teleskopschiene 1 mit einer Außenschiene 2, einer Mittelschiene 3 und einer Innenschiene 4. Die Innenschiene 4 ist gegenüber der Mittelschiene 3 und die Mittelschiene 3 gegenüber der Außenschiene 2 zwischen jeweiligen Einschubendlagepositionen und Auszugsendlagepositionen in einer Einschubrichtung E und einer dazu entgegengesetzten Auszugsrichtung A linear verschiebbar gelagert. Die Einschubrichtung E und die dazu entgegengesetzte Auszugsrichtung A sind in Figur 1 durch einen in die jeweiligen Richtungen weisenden Doppelpfeil angegeben. Die Schienenelemente 2, 3, 4 sind über Kugellager mit in Kugelkäfigen angeordneten und geführten Kugeln verschiebbar aneinander gelagert. Die Teleskopschiene ist mit Anschlägen in beiden Verschieberichtungen ausgestattet, welche den Verschiebeweg der einzelnen Schienenelemente gegeneinander begrenzen, so dass die Schienenelemente nicht über ihre jeweiligen Endlagenposition hinaus verschoben werden können und somit nicht auseinanderlaufen und voneinander getrennt werden können.

In der gezeigten Ausführungsform der Erfindung weisen die Außenschiene 2, die Mittelschiene 3 und die Innenschiene 4 jeweils im Querschnitt ein C-Profil auf mit jeweils einem von dem Steg des C-Profils gebildeten Schienenrücken und mit an den Flanschen des jeweiligen C-Profils ausgebildeten Laufbahnen für das Abwälzen der Kugeln der Kugellager.

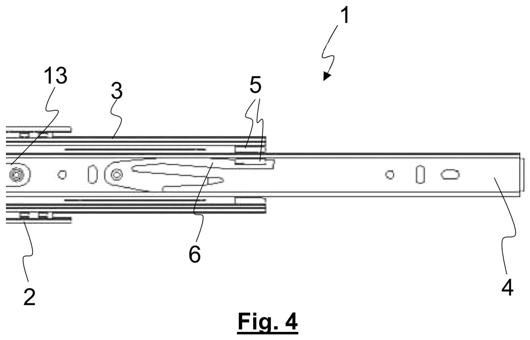

Die Mittelschiene weist ein erstes Rastelement 5 und die Innenschiene ein in der Schnittdarstellung der Figur 4 gezeigtes zweites Rastelement 6 auf für ein form- und kraftschlüssiges lösbares Ineingrifftreten und für ein Verrasten der Innenschiene und der Mittelschiene, wenn die Innenschiene in Auszugsrichtung A bis zu der ersten Auszugsendlageposition an der Mittelschiene verschoben ist. In der vorliegenden Ausführungsform sind das erste und das zweite Rastelement 5 und 6 als Kunststoffformteile ausgebildet und an den jeweiligen Schienenelementen festgelegt. Das an der Innenschiene 4 festgelegte zweite Rastelement 6 weist einen sich in Auszugsrichtung erstreckenden, federnd vorgespannten Arm mit einer Ausnehmung auf. Das erste Rastelement 5 an der Mittelschiene 3 weist eine länglich ausgebildete Rastnase auf, die beim Verschieben der Innenschiene 4 an den federnd vorgespannten Arm des ersten Rastelements 5 herangeführt wird, diesen entgegen der Federvorspannung parallel zum Schienenrücken der Innenschiene weg drückt und für ein Verrasten in der Ausnehmung am zweiten Rastelement 6 zu liegen kommt. Es sind Anführschrägen vorgesehen, um das Wegdrücken des federnd vorgespannten Arms der Rastnase beim Einfahren in die Verrastungsposition sowie beim Herausfahren aus der Verrastungsposition gewährleisten bzw. zu erleichtern.

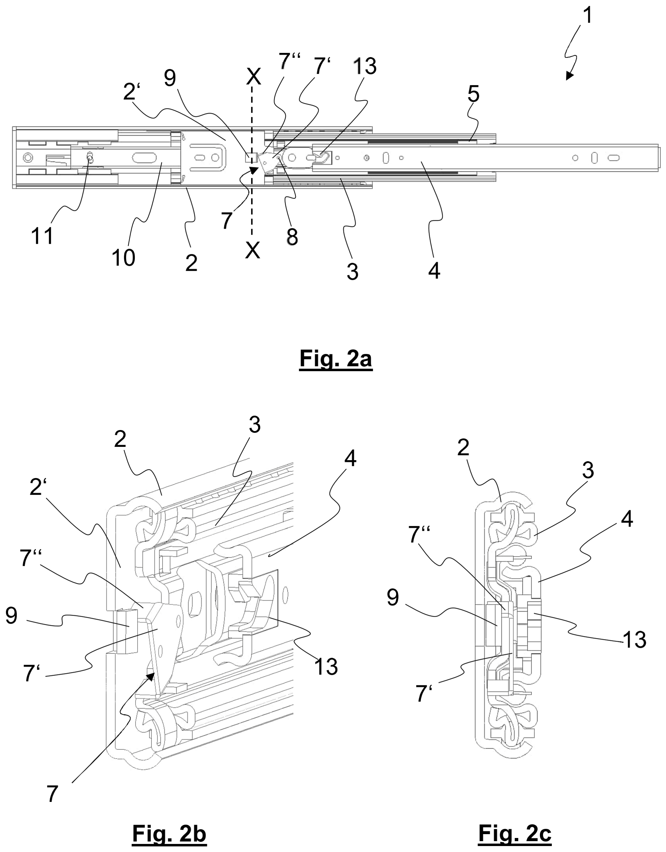

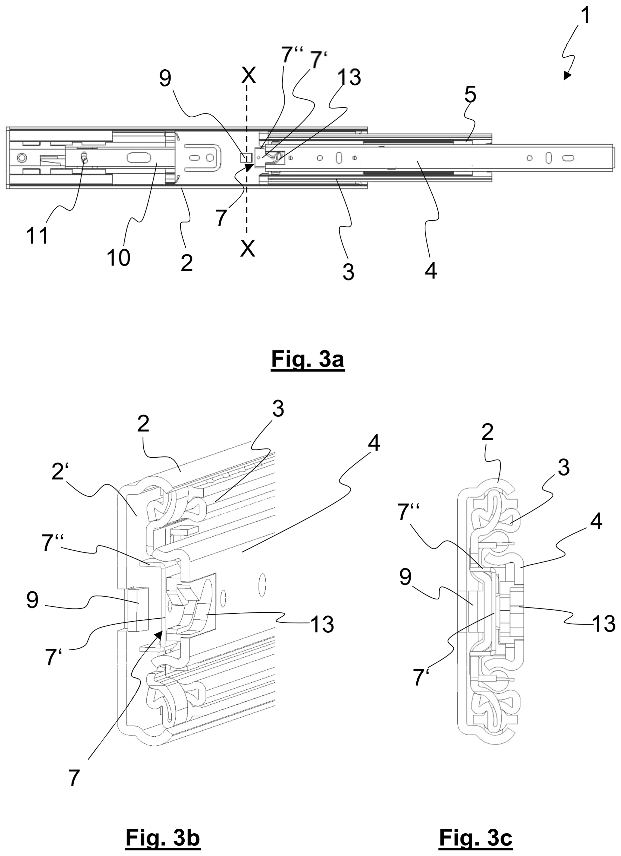

Für ein lösbares Verrasten der Mittelschiene 3 gegenüber der Außenschiene 2 ist an der Mittelschiene 3 eine Haltefalle 7 angeordnet, welche um eine senkrecht zu der Einschubrichtung E und der dazu entgegengesetzten Auszugsrichtung A, hier senkrecht zur Ebene des Schienenrückens 2' der Außenschiene 2, angeordnete Drehachse 8 zwischen einer Haltestellung und einer Neutralstellung drehbar festgelegt ist. Figuren 2a-2c zeigen die Haltefalle 7 in der Haltestellung, während Figuren 3a-3c die Haltefalle 7 in der Neutralstellung zeigen.

Am Schienenrücken 2' der Außenschiene 2 ist ein Haltevorsprung 9 angeordnet, der vom Schienenrücken 2' der Außenschiene 2 hervortritt. In der vorliegenden Ausführungsform ist der Haltevorsprung 9 als eine aus dem Material des Schienenrückens ausgeschnittene und gekröpft aufgebogene Lasche ausgebildet.

Der Haltevorsprung 9 ist am Schienenrücken 2' der Außenschiene 2 an einer Position angeordnet ist, dass die Haltefalle 7 hinter dem Haltevorsprung 9 angeordnet ist, wenn die Mittelschiene 3 in Auszugsrichtung A bis zu der zweiten Auszugsendlageposition an der Außenschiene 2 verfahren ist.

Die Haltefalle 7 weist einen sich senkrecht zur Drehachse 8 der Haltefalle 7 und parallel zum Schienenrücken der Außenschiene erstreckenden ersten Haltefallenabschnitt 7' und einen sich vom ersten Haltefallenabschnitt 7' in einer Richtung zum Schienenrücken 2' der Außenschiene 2 abgewinkelt erstreckenden zweiten Haltefallenabschnitt 7" auf. Der zweite Haltefallenabschnitt 7" der Haltefalle 7 ist ausgebildet und angeordnet, dass er in der Haltestellung der Haltefalle 7 für ein Blockieren eines Verschiebens der Mittelschiene 3 aus der zweiten Auszugsendlageposition in Einschubrichtung an dem vom Schienenrücken 2' der Außenschiene 2 hervortretenden Haltevorsprung 9 in Anlage tritt, wie in Figur 2 gezeigt. Dadurch ist die Mittelschiene gegenüber der Außenschiene in der zweiten Auszugsendlageposition verrastet. In der in Figur 3 gezeigten Neutralstellung der Haltefalle 7 ist der zweite Haltefallenabschnitt 7" der Haltefalle 7 in einer Position, dass er bei einem Verschieben der Mittelschiene 3 aus der zweiten Auszugsendlageposition in Einschubrichtung nicht in Anlage mit dem vom Schienenrücken 2' der Außenschiene 2 hervortretenden Haltevorsprung 9 tritt, sondern an diesem vorbeiführbar ist. In der Neutralstellung der Haltefalle 7 ist die Mittelschiene für ein Verschieben aus zweiten Auszugsendlageposition in Einschubrichtung freigegeben.

Der Haltevorsprung 9 ist so ausgebildet, dass er von dem Schienenrücken 2' der Außenschiene 2 nur bis zu einem Abstand hervortritt, dass der erste Haltefallenabschnitt 7' der Haltefalle 7 bei einem Verschieben der Mittelschiene 3 gegenüber der Außenschiene 2 nicht mit dem Haltevorsprung 9 in Berührung tritt, sondern über diesen in Einschubrichtung bzw. Auszugsrichtung hinüber geführt werden kann, wenn die Haltefalle in der Neutralstellung ist.

In der vorliegenden Ausführungsform ist die Haltefalle 7 durch Schwerkraft aus der Neutralstellung in die Haltestellung drehbar, wenn die Teleskopschiene waagerecht in Bezug auf die Einschubrichtung E und die Auszugsrichtung A und mit vertikaler Ausrichtung der Schienenrücken der Schienenelemente angeordnet ist, was in vielen Anwendungen die Regel ist, wie beispielsweise für das Führen von Schüben an einem Korpus. **In** der vorliegenden Ausführungsform weist die Haltefalle 7 an ihrem Ende in Einschubrichtung ein C-Profil auf, sodass dem in den vorliegenden Darstellungen in Schwerkraftrichtung oben angeordneten zweiten Haltefallenabschnitt 7" in Schwerkraftrichtung unten ein entsprechender Haltefallenabschnitt gegenüber liegt. Diese Ausführung erlaubt es, die gleichen Teleskopschienen auch in umgekehrter Orientierung auf einander gegenüberliegenden Seiten eines Auszugs oder in entgegengesetzten Verschieberichtungen zu verwenden, da durch das C-Profil der Haltefalle 7 immer ein zweiter Haltefallenabschnitt in Bezug auf die Schwerkraftrichtung oben angeordnet ist und durch die Schwerkraft in die Verrastungsposition fallen kann.

In der vorliegenden Ausführungsformen weist die Haltefalle 7 in der Neutralstellung bzw. bezogen auf die Neutralstellung senkrecht zur Einschubrichtung E und Auszugsrichtung A eine Breite auf, die geringer ist als der kürzeste Abstand zwischen den Laufbahnen der Innenschiene 4. So ist die Haltefalle 7 an der Mittelschiene 3 zwischen die Laufbahnen der Innenschiene 4 einführbar, wenn die Innenschiene 4 in Einschubrichtung E über die Haltefalle 7 geschoben wird. Zudem weist die Haltefalle 7 an dem ersten Haltefallenabschnitt 7' Anlaufschrägen auf, welche für eine Anlage mit einem Endabschnitt einer Laufbahn der Innenschiene 4 angeordnet sind, sodass die Innenschiene 4 bei einem Verschieben in Einschubrichtung E die Haltefalle aus der Haltestellung in die Neutralstellung drückt und die Mittelschiene aus der Verrastung mit der Außenschiene in der zweiten Auszugsendlageposition löst und für ein Verschieben in Einschubrichtung freigibt.

Des Weiteren ist an dem in Einschubrichtung weisenden Endabschnitt der Außenschiene 2 ein Selbsteinzug 10 festgelegt ist für ein kraftunterstütztes Verschieben bzw. Einziehen der Innenschiene 4 aus einem Abstand von einer Einschubendlageposition der Innenschiene 4 gegenüber der Außenschiene 2 in die Einschubendlageposition. Der Selbsteinzug 10 weist einen sich senkrecht zum Schienenrücken 2' der Außenschiene 2 erstreckenden, zapfenförmigen Mitnehmer 11 auf sowie und ein mit dem Mitnehmer 11 verbundenes Kraftunterstützungselement (nicht dargestellt), welches den Mitnehmer 11 in Einschubrichtung zieht bzw. welches den Mitnehmer 11 in Einschubrichtung vorgespannt hält, wenn der Mitnehmer 11 in einem Abstand von der Einschubendlageposition arretiert ist.

An dem in Einschubrichtung weisenden Endabschnitt der Innenschiene 4 ist eine Einhalterung 13 für einen lösbaren Eingriff mit dem Mitnehmer 11 am Selbsteinzug 10 angeordnet. Die Einhalterung 13 ist so ausgebildet, dass sie mit dem Mitnehmer in Eingriff ist und bleibt, wenn der Mitnehmer von dem Kraftunterstützungselement in Einschubrichtung E in die Einschubendlageposition der Innenschiene 4 gegenüber der Außenschiene 2 gezogen wird, wie es in Figur 1 gezeigt ist. Die Einhalterung 13 weist in Einschubrichtung eine Einführöffnung für eine Aufnahme des Mitnehmers 11 auf sowie eine Kontur, durch die der Mitnehmer 11 seitwärts verschoben und je nach Verschieberichtung der Innenschiene 4 in oder außer Eingriff mit der Einhalterung 13 gebracht wird.

Wird die Innenschiene 4 aus der Einschubendlageposition gegenüber der Außenschiene 2 in Auszugsrichtung gezogen, wird der Mitnehmer 11 von der Innenschiene 4 entgegen der in Einschubrichtung E gerichteten Vorspannung durch das Kraftunterstützungselement gezogen und durch eine Seitwärtsbewegung in einem Abstand zur Einschubendlageposition entgegen der Vorspannung durch das Kraftunterstützungselement in eine arretierte Position gebracht. Durch die Seitwärtsbewegung kommt der Mitnehmer 11 in eine Position, dass er durch die Einführöffnung außer Eingriff mit der Einhalterung 13 gebracht wird, sodass die Innenschiene weiter in Auszugsrichtung verfahrbar ist. In umgekehrter Richtung, wenn die Innenschiene 4 mit der Einhalterung 13 in Einschubrichtung an den Mitnehmer 11 herangeschoben wird, tritt der Mitnehmer in die Einführöffnung der Einhalterung 13 ein, wird bei weiterem Verfahren der Innenschiene 4 in Einschubrichtung an der Kontur der Einhalterung seitwärts verschoben, dabei in Eingriff mit der Einhalterung 13 gebracht und aus der Arretierung im Abstand von der Einschubendlageposition gelöst, sodass die Innenschiene 4 kraftunterstützt in die Einschubendlageposition gezogen wird.

Wird die Innenschiene 4 in Auszugsrichtung A verschoben, nimmt sie die Mittelschiene 3 mit bis in die zweite Auszugsendlageposition. Dabei ist die Haltefalle 7 in der Neutralstellung und wird bis über den Haltvorsprung 9 verfahren. Sobald die Mittelschiene die zweite Auszugsendlageposition erreicht hat und die Innenschiene weiter in Auszugsrichtung verschoben wird, gibt die Innenschiene die Haltefalle 7 frei, sodass diese hinter dem Haltevorsprung 9 durch die Schwerkraft aus der Neutralstellung in die Haltestellung gedreht wird und die Mittelschiene 3 gegenüber der Außenschiene 2 verrastet.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Teleskopschiene
- 2: Außenschiene
- 2': Schienenrücken der Außenschiene
- 3: Mittelschiene
- 4: Innenschiene
- 5: erstes Rastelement (an der Mittelschiene)
- 6: zweites Rastelement (an der Innenschiene)
- 7: Haltefalle (an der Mittelschiene)
- 7': erster Haltefallenabschnitt
- 7": zweiter Haltefallenabschnitt
- 7‴: Anlaufschräge am ersten Haltefallenabschnitt 7'
- 8: Drehachse (der Haltefalle)
- 9: Haltevorsprung (an der Außenschiene)
- 10: Selbsteinzug
- 11: Mitnehmer (am Selbsteinzug)
- 12: Kraftunterstützungselement (am Selbsteinzug)
- 13: Einhalterung (an der Innenschiene)
- E: Einschubrichtung
- A: Auszugsrichtung

## Patentansprüche

1. Teleskopschiene (1)
- mit einer Außenschiene (2), einer Mittelschiene (3) und einer Innenschiene (4), wobei die Innenschiene (4) zwischen einer ersten Einschubendlageposition und einer ersten Auszugsendlageposition an der Mittelschiene (3) in einer Einschubrichtung (E) und einer dazu entgegengesetzten Auszugsrichtung (A) linear verschiebbar gelagert ist,
und wobei die Mittelschiene (3) zwischen einer zweiten Einschubendlageposition und einer zweiten Auszugsendlageposition an der Außenschiene (2) in der Einschubrichtung (E) und der dazu entgegengesetzten Auszugsrichtung (A) linear verschiebbar gelagert ist,
- wobei die Außenschiene (2), die Mittelschiene und die Innenschiene (4) jeweils einen Schienenrücken (2', 3', 4') und sich von dem Schienenrücken abgewinkelt erstreckende Abschnitte mit daran ausgebildeten Laufbahnen (2", 2"', 3", 3"', 4", 4‴) aufweisen,
- wobei die Mittelschiene (3) ein erstes Rastelement (5) aufweist und die Innenschiene (4) ein zweites Rastelement (6) aufweist, wobei das erste Rastelement (5) und das zweite Rastelement (6) für ein formschlüssiges und/oder kraftschlüssiges lösbares Ineingrifftreten und für ein Verrasten der Mittelschiene (3) und der Innenschiene (4) ausgebildet sind in einer Position, bei der die Innenschiene (4) in Auszugsrichtung (A) bis zu der ersten Auszugsendlageposition an der Mittelschiene (3) verschoben ist,
- wobei an der Mittelschiene (3) weiterhin eine Haltefalle (7) angeordnet ist, welche um eine senkrecht zur Einschubrichtung (E) und Auszugsrichtung (A) angeordnete Drehachse (8) zwischen einer Haltestellung und einer Neutralstellung drehbar oder schwenkbar festgelegt ist,
- wobei am Schienenrücken (2') der Außenschiene (2) ein Haltevorsprung (9) angeordnet ist und vom Schienenrücken (2') der Außenschiene (2) hervortritt,
- wobei der Haltevorsprung (9) am Schienenrücken (2') der Außenschiene (2) an einer Position angeordnet ist, dass die Haltefalle (7) hinter dem Haltevorsprung (9) angeordnet ist, wenn die Mittelschiene (3) in Auszugsrichtung (A) bis zu der zweiten Auszugsendlageposition an der Außenschiene (2) verfahren ist,
- wobei die Haltefalle (7) im Querschnitt einen sich senkrecht zur Drehachse (8) der Haltefalle (7) erstreckenden ersten Haltefallenabschnitt (7') und einen sich vom ersten Haltefallenabschnitt (7') in einer Richtung zum Schienenrücken (2') der Außenschiene (2) abgewinkelt erstreckenden zweiten Haltefallenabschnitt (7") aufweist,
- wobei der zweite Haltefallenabschnitt (7") der Haltefalle (7) ausgebildet und angeordnet ist, dass er in der Haltestellung der Haltefalle (7) für ein Blockieren eines Verschiebens der Mittelschiene (3) aus der zweiten Auszugsendlageposition in Einschubrichtung (E) an dem vom Schienenrücken (2') der Außenschiene (2) hervortretenden Haltevorsprung (9) in Anlage tritt, und dass er in der Neutralstellung der Haltefalle (7) bei einem Verschieben der Mittelschiene (3) aus der zweiten Auszugsendlageposition in Einschubrichtung (E) an dem vom Schienenrücken (2') der Außenschiene (2) hervortretenden Haltevorsprung (9) nicht in Anlage tritt,
- wobei der Haltevorsprung (9) bis zu einem Abstand von dem Schienenrücken (2') der Außenschiene (2) hervortritt und/oder der erste Haltefallenabschnitt (7') der Haltefalle (7) ausgebildet und angeordnet ist, dass der erste Haltefallenabschnitt (7') der Haltefalle (7) bei einem Verschieben der Mittelschiene (3) gegenüber der Außenschiene (2) nicht mit dem Haltevorsprung (9) in Berührung tritt,
- wobei an dem in Einschubrichtung weisenden Endabschnitt der Außenschiene (2) ein Selbsteinzug (10) festgelegt ist für ein kraftunterstütztes Verschieben der Innenschiene (4) aus einem Abstand von einer Einschubendlageposition der Innenschiene (4) gegenüber der Außenschiene (2) in die Einschubendlageposition, wobei der Selbsteinzug (10) einen Mitnehmer (11) und ein mit dem Mitnehmer (11) verbundenes Kraftunterstützungselement (12) aufweist und wobei der Mitnehmer (11) durch das Kraftunterstützungselement (12) in Einschubrichtung vorgespannt in einem Abstand von der Einschubendlageposition arretierbar ist,
- wobei an dem in Einschubrichtung weisenden Endabschnitt der Innenschiene (4) eine Einhalterung (13) für einen lösbaren Eingriff mit dem Mitnehmer (11) am Selbsteinzug (10) angeordnet ist,
- wobei die Einhalterung (13) angeordnet und ausgebildet ist, dass sie bei einem Verschieben der Innenschiene (4) in Einschubrichtung nicht in Anlage mit der Haltefalle (7) an der Mittelschiene (3) kommt.

2. Teleskopschiene (1) nach Anspruch 1, **dadurch gekennzeichnet, dass** die Außenschiene (2), die Mittelschiene (3) und die Innenschiene (4) im Querschnitt ein C-Profil aufweisen mit einem von dem Steg des C-Profils gebildeten Schienenrücken (2', 4') und mit an den Flanschen des C-Profils ausgebildeten Laufbahnen (2", 2"', 3", 3"', 4", 4‴) für das Abwälzen von Wälzkörpern oder für das Führen von Gleitelementen.

3. Teleskopschiene (1) nach einem der vorhergehenden Ansprüche, **dadurch gekennzeichnet, dass** die Außenschiene (2), die Mittelschiene (3) und die Innenschiene (4) aus gewalztem Stahlblech hergestellt sind.

4. Teleskopschiene (1) nach einem der vorhergehenden Ansprüche, **dadurch gekennzeichnet, dass** die Haltefalle (7) an der Mittelschiene (3) an ihrem in Einschubrichtung (E) weisenden Endabschnitt im Querschnitt ein C-Profil oder ein **L-**Profil aufweist, wobei der sich senkrecht zur Drehachse (8) erstreckende erste Haltefallenabschnitt (7') vom Steg des C-Profils oder von einem Schenkel des L-Profils gebildet wird und der sich vom ersten Haltefallenabschnitt (7') in einer Richtung zum Schienenrücken (2') der Außenschiene (2) abgewinkelt erstreckende zweiten Haltefallenabschnitt (7") von einem Flansch des C-Profils oder von dem weiteren Schenkel des L-Profils gebildet wird.

5. Teleskopschiene (1) nach einem der vorhergehenden Ansprüche, **dadurch gekennzeichnet, dass** die Haltefalle (7) an der Mittelschiene (3) in der Neutralstellung senkrecht zur Einschubrichtung (E) und Auszugsrichtung (A) eine Breite aufweist, die geringer ist als der kürzeste Abstand zwischen den Laufbahnen (4", 4‴) der Innenschiene (4).

6. Teleskopschiene (1) nach einem der vorhergehenden Ansprüche, **dadurch gekennzeichnet, dass** die Haltefalle (7) an der Mittelschiene (3) bei einer Ausrichtung der Teleskopschiene (1) waagerecht in Bezug auf die Einschubrichtung (E) und die Auszugsrichtung (A) und vertikaler Ausrichtung der Schienenrücken der Schienenelemente durch Schwerkraft aus der Neutralstellung in die Haltestellung drehbar oder schwenkbar ist, oder
dass an der Mittelschiene (3) ein Federelement oder Zugelement vorgesehen ist, welches die Haltefalle (7) an der Mittelschiene (3) für eine Drehung oder Verschwenkung aus der Neutralstellung in die Haltestellung vorspannt.

7. Teleskopschiene (1) nach einem der vorhergehenden Ansprüche, **dadurch gekennzeichnet, dass** die Haltefalle (7) an der Mittelschiene (3) an dem ersten Haltefallenabschnitt (7') wenigsten eine Anlaufschräge (1‴) aufweist, welche für eine Anlage mit einem Endabschnitt der Innenschiene (4), vorzugsweise einem Endabschnitt einer Laufbahn (4", 4‴) der Innenschiene (4), angeordnet ist, wenn die Haltefalle (7) in der um die Drehachse (8) gedrehten oder verschwenkten Haltestellung ist, und wobei die Anlaufschräge (7‴) für ein Drehen oder Verschwenken der Haltefalle (7) aus der Haltestellung in die Neutralstellung bei einem Verschieben der Innenschiene (4) in Einschubrichtung (E) ausgebildet und angeordnet ist.

8. Teleskopschiene (1) nach einem der vorhergehenden Ansprüche, **dadurch gekennzeichnet, dass** das Kraftunterstützungselement (12) an dem Selbsteinzug (10) wenigstens ein Federelement umfasst, ausgewählt unter Zugefederelementen, Druckfederelementen und Kombinationen davon, wobei das Kraftunterstützungselement (12) an dem Selbsteinzug (10) vorzugsweise wenigstens eine Spiralzugfeder umfasst.

9. Teleskopschiene (1) nach einem der vorhergehenden Ansprüche, **dadurch gekennzeichnet, dass** der Selbsteinzug (10) weiterhin ein Dämpfungselement aufweist, vorzugsweise wenigstens einen Luftdruckdämpfer oder Öldruckdämpfer, welches für ein Dämpfen des Verschiebens und/oder des kraftunterstützten Verschiebens der Innenschiene (4) in die zweite Einschubendlageposition angeordnet ist.

10. Teleskopschiene (1) nach einem der vorhergehenden Ansprüche, **dadurch gekennzeichnet, dass** der Mitnehmer (11) am Selbsteinzug (10) als ein Zapfen oder eine Lasche ausgebildet ist, welcher/welche in einer Richtung senkrecht zum Schienenrücken (2') der Außenschiene (2) hervorsteht und die Einhalterung (13) am Endabschnitt der Innenschiene (4) eine Einlauföffnung für ein Einführen des Mitnehmers (11) und Führungsflächen für eine Seitwärtsführung des Mitnehmers (11) aufweist.

11. Teleskopschiene (1) nach einem der vorhergehenden Ansprüche, **dadurch gekennzeichnet, dass** das erste Rastelement (5) an der Mittelschiene (3) festgelegt oder einstückig mit dieser ausgebildet ist und/oder das zweite Rastelement (6) an der Innenschiene (4) festgelegt oder einstückig mit dieser ausgebildet ist.

12. Teleskopschiene (1) nach einem der vorhergehenden Ansprüche, **dadurch gekennzeichnet, dass** die Haltefalle (7) an dem in Einschubrichtung weisenden Endabschnitt der Mittelschiene (3) festgelegt ist oder an einem Abschnitt der Mittelschiene (3), welcher zwischen dem in Einschubrichtung weisenden Endabschnitt der Mittelschiene (3) und dem in Einschubrichtung weisenden Endabschnitt der Innenschiene (4) liegt, wenn die Innenschiene (4) in Auszugsrichtung (A) bis zu der ersten Auszugsendlageposition an der Mittelschiene (3) verschoben ist.

13. Teleskopschiene (1) nach einem der vorhergehenden Ansprüche, **dadurch gekennzeichnet, dass** die Einhalterung (13) an dem in Einschubrichtung weisenden Endabschnitt der Innenschiene (4) ausbildet ist für ein Arretieren des Mitnehmers entgegen der in Einschubrichtung gerichteten Vorspannung durch das Kraftunterstützungselement (12) in einem Abstand von der Einschubendlageposition der Innenschiene gegenüber der Außenschiene und für ein Lösen des Eingriffs mit dem Mitnehmer (11) bei einer Verschiebebewegung der Innenschiene (4) in Auszugsrichtung (A) und für ein Lösen des Mitnehmers aus der Arretierung und für einen Eingriff mit dem Mitnehmer (11) bei einer Verschiebebewegung der Innenschiene (4) in Einschubrichtung (E).
